# EUROPEAN PATENT APPLICATION

(11) **EP 1 372 128 A2**
(43) Date of publication of application: **17.12.2003**
(21) Application number: 03101658.7
(22) Date of filing: 06.06.2003
(51) Int. Cl.: G09B 9/28

(54) **Apparatus and method of force feedback input for flight simulator**

(30) Priority: 14.06.2002 GB 0213718
(71) Applicant: Thales Plc, Fleet, Hampshire GU51 3NY (GB)
(72) Inventor: Grossart, Stuart James Cameron, 94117 CX, Arcueil (FR)
(74) Representative: Lucas, Laurent Jacques

(57) **Abstract**

The apparatus comprises :
an electrical rotary drive motor (25);
a pulley means having a pulley wheel means (21) operatively coupled to the electrical drive motor, and a pulley line means;
an actuator shaft (4) connected to the pulley line means such that operation of the rotary drive motor urges non-arcuate and substantially linear movement of the actuator shaft;
loading interface means (6) connected to the actuator shaft for providing an interface between the actuator shaft and a user manipulable vehicle simulator control member (2), and for applying a loading force as provided by the urging of substantially linear movement of the actuator shaft.

## Description

The present invention relates to an apparatus and method for providing a loading force for application to a user manipulable vehicle simulator control member, and particularly, though not exclusively, for use in an aircraft simulator or flight simulator.

Aircraft simulator systems typically employ a physical mock-up of the cockpit of the aircraft being simulated. Such a cockpit consequently includes user (e.g. pilot) manipulable aircraft controls such as rudder pedals, and control sticks or the like. Typically, a simulator cockpit is arranged to not only look like a real aircraft cockpit but also to "feel" like a real aircraft cockpit. That is to say, when a user (e.g. pilot) manipulates the aircraft controls during a flight simulation in response to visual (or other) stimuli generated during the simulation, the aircraft controls are typically arranged to respond to the user's manipulation of them in a manner which emulates the response that would be provided by the aircraft being simulated and according to the conditions being simulated.

This emulated control response is typically provided by hydraulic control loading apparatus which apply a controlled loading force to a part of the user manipulable control member (pedal, stick etc.) so is to give that control member the correct "feel" (e.g. stiffness) when manipulated.

Hydraulic control loading apparatus often employ a hydraulic actuator, in the form of a hydraulic ram or the like, fixed to the frame of the aircraft simulator and connected, via a suitable linkage or interface, to a part of the aircraft control member being loaded. The arm of the hydraulic actuator is then suitably controlled to extend and retract in a linear fashion thereby to apply a loading force to the aircraft control member via the interface therewith to emulate the response of the aircraft control member in accordance with the prevailing simulation conditions.

Position sensors placed upon or adjacent the aircraft control member provide signal indicating the position thereof, and these signal are typically input to a control means, such as computer control means, which generates control signals with which to appropriately control the hydraulic actuator in accordance with the aircraft control member's position signals.

However, maintenance of the typically many hydraulic actuators arranged on an aircraft simulator is often labour intensive. This is because, being hydraulic, such actuators employ hydraulic fluid which often leaks from the actuators, and may regularly require changing as do the hydraulic seals required of such apparatus.

Electrical actuators are known in the art which employ a pivoting coupling/interface between an electrical drive motor and aircraft control members (e.g. stick/pedal) being loaded thereby. That is to say, the dynamics of the control loading mechanism of such electrical actuators is such that the direction of the loading force applied thereby to an aircraft control member is applied by a pivoting arm and therefore changes depending upon the position of the pivoting actuator arm.

Thus, such devices operate in a dynamically different way to existing hydraulic actuators which provide a substantially linear coupling/interface between an actuator arm and the aircraft control member (e.g. stick/pedal) being loaded thereby and so provide a constant-direction loading force in use. Consequently, such existing electrical actuators are generally more complex to control since the variation in the direction of the loading force applied thereby must be taken into account when calculating the magnitude of force to be applied during loading and requires more complex control computer programming than is required of hydraulic actuators such as described above. Thus, existing electrical actuators are generally not easily interchangeable with their hydraulic equivalents for the above reason. Furthermore, existing electrical actuators are generally larger than their hydraulic counterparts and are often too large to fit into the often limited spaces made available in aircraft simulator structures for housing their hydraulic counterparts and, due to their different mechanical dynamics (i.e. pivoting) require different couplings, linkages and interfaces with aircraft control members. This further prevents direct interchangeability with existing hydraulic actuators.

The present invention aims to overcome at least some of the aforementioned deficiencies in the prior art.

At its most general, the present invention proposes an electrical control loading apparatus which provides a rotary-to-linear motion conversion between an electrical drive motor and an actuator arm or shaft so as to provide a substantially constant-direction loading force for application to a vehicle simulator control member such as an aircraft simulator control member (e.g. stick/pedal) being loaded thereby in use. Preferably, the electrical control loading apparatus may be dimensioned to directly fit in place of an equivalent hydraulic actuator within the space/volume provided therefor in existing vehicle simulator frames.

This may therefore provide an electrical control loading apparatus which does not suffer from the high-maintenance requirements associated with existing hydraulic actuators, but which retains the constant-direction loading force dynamics associated with existing hydraulic actuators (in distinction to those of existing electrical actuators). Consequently, the present invention may provide an electrical control loading apparatus which dynamically emulates (and which may directly replace) existing hydraulic control loading apparatus without the need to account for differing loading force dynamics. This may enable existing actuator-to-control member linkages to be employed (as designed for existing hydraulic actuators) and also enables existing control software to be employed with little or no modifications.

In a first of its aspects, the present invention may provide an electrical control loading apparatus for providing a loading force for application to a user manipulable vehicle simulator control member, the apparatus including an electrical actuator comprising:
an electrical rotary drive motor;
a pulley means having a pulley wheel means operatively coupled to the electrical drive motor, and a pulley line means;
an actuator shaft connected to the pulley line means such that operation of the rotary drive motor urges non-arcuate and substantially linear movement of the actuator shaft;
loading interface means connected to the actuator shaft for providing an interface between the actuator shaft and a user manipulable vehicle simulator control member, and for applying a loading force as provided by the urging of substantially linear movement of the actuator shaft.

Thus, by operatively coupling the rotary electrical motor to the pulley wheel means, and by operatively coupling the pulley line means to the pulley wheel means and to the actuator shaft, the electrical rotary motor provides a rotary dynamic (or static) force which is coupled to the actuator shaft as a linear dynamic (or static) force via the pulley means. Due to the nature in which the pulley means is coupled to the rotary motor and the actuator shaft it may convert rotation of the drive shaft of the drive motor (or the urging of rotation thereof by operation of the electrical motor) into rectilinear motion of the actuator shaft (or an urging thereof to move). This provides a rotary-to-linear motion, or urging force, conversion.

It is to be understood that the non-arcuate and substantially linear movement of the actuator shaft means that the actuator shaft is not constrained to follow and does not follow an arcuate path (e.g. part-circular or otherwise curved) and as a result avoids any significant change (e.g. average change) in the direction of motion/urging by the actuator shaft along the full range of movement of the actuator shaft. A significant (e.g. average) change in the direction of motion/urging by the actuator shaft along the full range of movement of the actuator shaft includes an angular change in direction exceeding about two degrees, or more preferably exceeding about one degree, or more preferably exceeding half a degree, or yet more preferably exceeding one arc minute or most preferably half or one quarter of an arc minute or less. The result of such substantially linear movement of the actuator shaft is a constant-direction loading force therefrom.

It will be appreciated that the electrical rotary motor may "urge" linear motion in the actuator arm without actually achieving it if, for example, the loading force provided by the actuator is intended merely to act against a force applied to the control member by the user (e.g. pilot), either to balance the user-supplied force or to merely impede user-induced movement of the control member (e.g. to impart a feeling of "stiffness" to the control member).

The present invention may provide a de-mountable electrical control loading unit including the electrical control loading apparatus and an attachment means via which the electrical control loading apparatus may be de-mountably attached to a mounting means of a vehicle simulator.

Preferably the attachment means is arranged for attaching the electrical control loading apparatus to the frame, or other suitable part, of a vehicle (e.g. aircraft) simulator. Where a vehicle simulator frame has mounting means arranged/dimensioned for receiving an actuator apparatus (e.g. a hydraulic actuator of equivalent function to the electrical control apparatus of the present invention), the attachment means is preferably correspondingly arranged/dimensioned to operatively fit to such mounting means so as to de-mountably attach thereto.

The attachment means preferably comprises a split-frame means having:
a top-plate means arranged to fit to a mounting means of a vehicle simulator so as to de-mountably attach thereto;
a support-frame means arranged to support the electrical control loading apparatus and arranged to detachably attach to the top-plate means thereby to detachably attach the electrical control loading apparatus to the top-plate means.

Thus, by employing a split-frame attachment structure, one may adapt the top-plate means to be attachable to any pre-existing mounting means upon a simulator. For example, pre-existing bolt-hole patterns may be accommodated by suitably structuring the top-plate means so as to have correspondingly patterned bolt holes such that the top-plate means may be bolted to the simulator (e.g. to its frame) using the pre-existing bolt holes of the simulator mounting means. Thus, the top-plate means may function as a universal adaptor which may be arranged to suit any existing mounting means.

The support frame means upon which is supported the electrical control loading apparatus, may be detachably attached to the top-plate means after the top-plate means has been mounted upon the simulator. This permits the electrical control loading apparatus to be assembled upon the support-frame means separately from the simulator and top-plate means, and then detachably attached to the simulator via the pre-mounted top-plate means so as to fully assemble the de-mountable electrical control loading unit.

Preferably, the loading interface means and those parts of the pulley line means which extend between the pulley wheel means and the actuator shaft are arranged in a line along which the substantially linear movement of the actuator shaft is urged. Thus, the pulley line means may be connected to the actuator shaft such that it may pull the actuator shaft along a linear path as the pulley wheel means rotates. By ensuring that the loading interface means lies upon this linear path, the loading apparatus may ensure that the direction of the pulling force applied to the actuator shaft by the pulley means intersects the point of application of the resultant loading force applied by the loading apparatus, via the loading interface means, to a target vehicle (e.g. aircraft) control member (stick/pedal or the like).

This balancing of loading and reactive forces ensures that substantially no torque is applied to the actuator shaft via reactive forces emanating from the loading interface with the control member. Were such forces to be offset or unbalanced, the resultant torque upon the actuator shaft would result in a strain upon the electrical control loading apparatus typically resulting in greater wear and possibly reduced performance.

The pulley line means is preferably connected to the actuator shaft at two separated connection locations such that those parts of the pulley line means which extend from the pulley wheel means to the two separated connection locations extend in opposite directions along which the substantially linear movement of the actuator shaft is urged. Accordingly, rotation of the pulley means in opposite senses in such an arrangement causes pulling of the actuator shaft back and forth along a rectilinear path. By ensuring that the portions of pulley line extending from the pulley wheel to the actuator shaft are oppositely directed one ensures that they may apply (when under tension) substantially opposite forces to the pulley wheel means, and the actuator shaft. This results in little or substantially no force transverse to the line of movement of the actuator shaft resulting from tension in the pulley line, which may be pre-tensioned prior to application of loading forces. This balancing of pulley line forces helps reduce stress and wear in bearings of both the pulley means and the actuator shaft.

It will be appreciated that, during operation, the pulley line means may undergo a certain degree of stretching which may be undesirable and may be accounted for as described below. Pulley line stretching may be induced from the pulling of the actuator shaft in any one of the two directions of motion available to the shaft. Where the pulley line means consists of one continuous pulley line, it will be appreciated that one course of pulley line stretching may result from the pulling of the actuator shaft in either of both direction of motion available to the shaft. This subjects the one continuous pulley line to two sources of stretching.

However, the pulley line means may comprise two separate pulley lines each of which is separately connected to the pulley wheel means and is connected to the actuator rod at a respective one of the two separated connection locations. Accordingly, each of the two separate pulley lines is operable to pull the actuator shaft in only one of the two directions of available motion and, consequently, will generally be subjected to only one source of pulley line stretch.

Those parts of the pulley line means extending from the pulley wheel means to the actuator shaft may form one or more loops of pulley line, and the actuator shaft may have connector means located at the two separated connection locations via which the pulley line means is connected to the actuator shaft, wherein the connector means at one or more of the two separated connection locations engages with and is enclosed by the pulley line loop(s). Consequently, the loops of pulley line via which the pulley means couples to the actuator shaft thereby obviate the need to fix terminal pulley line ends to parts of the actuator shaft. The pulley line loops may be firmly connected to the actuator shaft by the connector means, but may be connected thereto in such a way as to enable the pulley line to slide or otherwise move relative to the actuator shaft and/or the connector means. For example, the connector means may comprise one or more bobbins or the like, or hooks or eyes formed in the actuator shaft (or connected to it), around or through which loops of pulley line are slidingly or fixedly looped.

The connector means are preferably adjustable such that at least one of the two separated connection locations is an adjustable location. For example, where the connection means include bobbins, hooks, or eyes or the like, the position of those means may be adjustable relative to the actuator shaft. This enables the tension in the pulley line to be adjusted (e.g. tightened) in use so as to account for pulley line stretching for example.

The electrical actuator may have a pulley wheel rotation-limiting means arranged to limit rotation of the pulley wheel means to be within a predetermined angular rotation range. For example, the pulley wheel rotation-limiting means may comprise one or more lugs arranged upon the electrical actuator in proximity to the pulley wheel means and arranged to engage with parts of the pulley wheel means when the pulley wheel means has rotated through a predetermined angle thereby to prevent further rotation of the pulley wheel means such as would cause the predetermined angle to be exceeded. In such a case the aforementioned parts of the pulley wheel means may be protrusions which are positioned thereupon such that only those protrusions engage with the lugs at the predetermined angles of pulley wheel rotation.

The electrical control loading apparatus may include a transmission drive gear means operatively connected to both the electrical rotary drive motor and the pulley wheel means thereby providing a drive coupling therebetween such that operation of the electrical rotary motor at a given rotation rate causes the pulley wheel means to simultaneously rotate at a predetermined lesser rate than the given rotation rate of the rotary motor.
A harmonic gear means may be employed with a predetermined reduction ratio such that rotation rates of the drive shaft of the rotary electrical motor are reduced thereby when coupling the drive shaft of the motor to the pulley wheel means.

An advantage of using such a drive gear means is the resultant increase in the loading forces that may be generated by the rotary motor as will be readily apparent.

The electrical control loading apparatus may include actuator control means for generating actuator control signals and for controlling the operation of the electrical actuator in accordance with such actuator control signals. The control means preferably includes a computer means and computer program means containing instructions which, when executed on the computer means, generate actuator control signals. The electrical control loading apparatus preferably includes position sensing means for sensing the position of a user manipulable vehicle (e.g. aircraft) control member (e.g. control stick/pedal) to which the electrical control loading apparatus is (or is to be) operatively connected, for input to the actuator control means for use in generating actuator control signals.

The electrical control loading apparatus may be employed in any vehicle simulator, but in particular may be applied to a flight simulator or aircraft simulator.

The pulley line means may be any suitable type of pulley line as would be readily apparent to the skilled person. Preferably, the pulley line is steel cable, but may be a cable or line formed from any other material which is suitably resistant to stretching. The pulley line may be in the form of a ribbon or chain or band.

The pulley wheel means may comprise one or more wheels each in the form or shape of a wheel or a drum and each wheel or drum preferably possesses a groove, or a series of parallel helical grooves, extending along the outer surface thereof within which pulley line may be located when wrapped across the pulley wheel means. For example, the pulley wheel means may comprise a single pulley wheel connected to or coupled to the drive shaft of the electrical rotary motor. Alternatively, the pulley wheel means may comprise additional pulley wheels/drums located between the motor drive shaft and the actuator shaft.

The pulley wheel means may include one or more toothed wheels/drums if the pulley line means employs a chain.

It is to be appreciated that the invention in its first aspect (and according to any or all of the variants described above) relates to the realisation of a method of electrical control loading, and it is intended that such method may be provided by the present invention in a second of its aspects.

Accordingly, in a second of its aspects, the present invention may provide a method of electrical control loading for providing a loading force for application to a user manipulable vehicle simulator control member, the method including:
providing an electrical rotary drive motor;
providing a pulley means having a pulley wheel means and a pulley line means; and,
providing an actuator shaft;
operatively coupling the pulley wheel means to the electrical drive motor;
connecting the pulley line means to the actuator shaft such that operation of the rotary drive motor urges non-arcuate and substantially linear movement of the actuator shaft;
providing loading interface means being connected to the actuator shaft to provide an interface between the actuator shaft and a user manipulable vehicle simulator control member; and,
operating the rotary drive motor so as to apply a loading force as provided by the urging of substantially linear movement of the actuator shaft.

Preferably the method includes de-mountably attaching the aforementioned electrical control loading apparatus to the frame, or other suitable part, of a vehicle (e.g. aircraft) simulator

Preferably, the method providing attachment means comprising a split-frame means having:
a top-plate means and a support frame means; the method further including:
   fitting the top-plate means to a mounting means of a vehicle simulator so as to de-mountably attach thereto;
   supporting the electrical control loading apparatus upon the support frame means; and,
   detachably attaching the support frame means to the top-plate means thereby to detachably attach the electrical control loading apparatus to the top-plate means.

The method preferably includes the step of arranging in a line the loading interface means and those parts of the pulley line means which extend between the pulley wheel means and the actuator shaft, along which line the substantially linear movement of the actuator shaft is urged.

The method preferably includes the step of connecting the pulley line means to the actuator shaft at two separated connection locations such that those parts of the pulley line means which extend from the pulley wheel means to the two separated connection locations extend in opposite directions along which the substantially linear movement of the actuator shaft is urged.

Preferably, the method includes:
providing the pulley line means in the form of two separate pulley lines;
separately connecting each of the two separate pulley lines to the pulley wheel means; and,
connecting each of the two separate pulley lines to the actuator rod at a respective one of two the separated connection locations.

A method of electrical control loading may include the steps of:
providing the actuator shaft connector means located at the two separated connection locations;
connecting the pulley line means to the actuator shaft using the actuator shaft connector means such that those parts of the pulley line means extending from the pulley wheel means to the actuator shaft form one or more loops of pulley line, wherein the connector means at one or more of the two separated connection locations engages with and is enclosed by the pulley line loop(s).

Preferably, according to this method, the connector means are adjustable such that at least one of the two separated connections locations is an adjustable location.

The method may further include the step of providing the electrical actuator with a pulley wheel rotation-limiting means arranged to limit rotation of the pulley wheel means to be within a predetermined angular rotation range. Accordingly, the method may comprise arranging one or more lugs upon the electrical actuator in proximity to the pulley wheel means so as to engage with parts of the pulley wheel means when the pulley wheel means has rotated through a predetermined angle thereby to prevent further rotation of the pulley wheel means such as would cause the predetermined angle to be exceeded.

The method of electrical control loading may also include operatively connecting a drive gear means to both the electrical rotary drive motor and the pulley wheel means to provide a drive coupling therebetween such that operation of the electrical rotary motor at a given rotation rate causes the pulley wheel means to simultaneously rotate at a predetermined lesser rate than the given rotation rate of the rotary motor.

An actuator control means may be provided according to the above method, for generating actuator control signals and for controlling the operation of the electrical actuator in accordance with such actuator control signals.

The present invention shall now be described by nonlimiting examples with reference to the accompanying drawings in which:
Figure 1 illustrates a schematic view of an electrical control loading apparatus upon a flight simulator apparatus;
Figure 2 illustrates an exploded view of an electrical control loading apparatus;
Figure 3 illustrates a side view of the electrical control loading apparatus or Figure 2;

In the accompanying Figures like elements have been assigned like reference numerals for consistency.

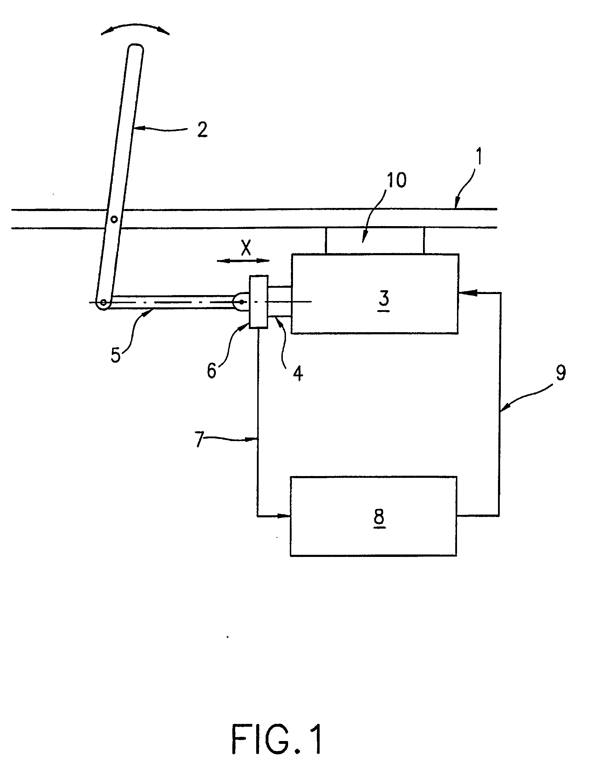

Referring to Figure 1 there is illustrated a portion of an aircraft simulator cockpit comprising an aircraft simulator frame 1 to which is connected a pilot manipulable aircraft control column 2 pivotably connected to the aircraft simulator frame 1 so as to be movable back and forth as illustrated in Figure 1. Connected to the underside of aircraft simulator frame 1 is an electrical control loading apparatus 10 including a rotary electrical drive motor, a pulley mechanism collectively denoted by the unit 3 and an actuator shaft 4 onto an end of which is directly attached a loading force interface mechanism 6 incorporating a force sensor.

The actuator shaft 4 of the electrical control loading apparatus extends from the unit 3 towards a lower end of the user manipulable aircraft control column 2 and is connected thereto via the loading force interface mechanism 6 (which incorporates the force sensor), and via an intermediate control rod 5. The actuator shaft 4 of the control loading apparatus is moveable, or may be urged to move, along a linear path X by the rotary electrical drive motor and pulley mechanism 3. A direct consequence of such movement, or urging, is the application of a loading force to the lower end of the control column 2 via the loading interface mechanism 6 and the intermediate control rod 5.

The force applied by the pilot to the aircraft control column 2 is detected by the force sensor of the loading force interface mechanism 6 which is operatively connected, via a signal transmission line 7, to a computerised control unit 8. Signals generated by the force sensor of the loading interface mechanism 6, representing the force applied by the pilot to the aircraft control column 2, are input to the computerised control unit 8 via the signal transmission line 7 and are employed in generating control signals via which the control unit 8 affects control of the loading force applied to the aircraft control column 2. Such control signals are directed via a control signal transmission line 9 to the rotary electrical motor of the electrical control loading apparatus thereby to control the movement (or the extent to which movement is urged) of the actuator shaft 4.

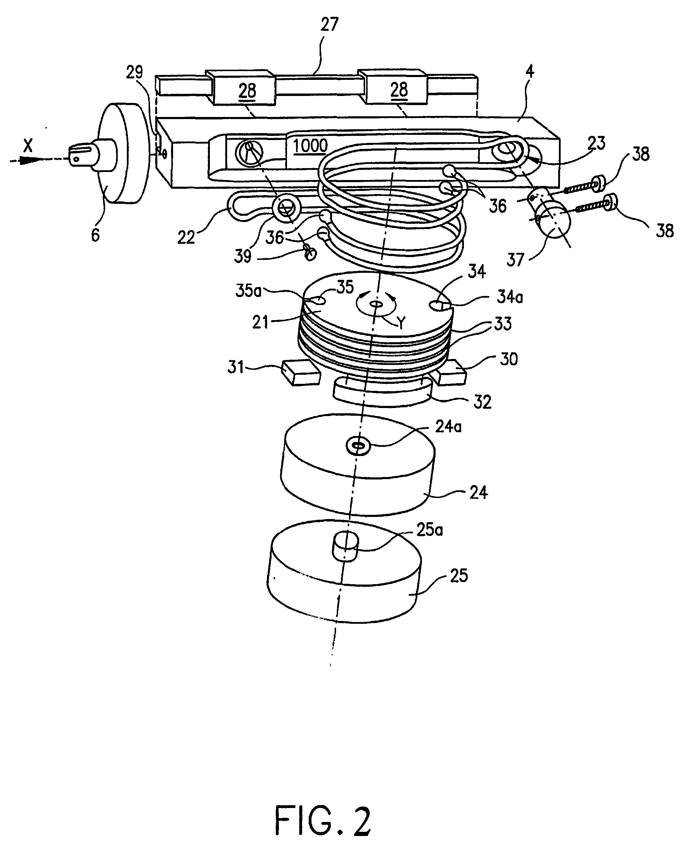

Referring to Figure 2 there is illustrated an exploded view of the rotary electrical motor 25, the actuator shaft 4, and the transmission system which couples the former to the latter and is contained within unit 3 of Figure 1.

A rotary electrical motor 25, of a suitable such type as would be readily apparent to the skilled person, possesses an output drive shaft 25a which is operatively coupled to a transmission reduction gearing system in the form of a harmonic drive 24. The harmonic drive 24 has a transmission reduction ratio of 50:1 such that rotation of the drive shaft 25a of the rotary electrical drive motor 25 at a given rotation rate causes the rotational transmission output shaft 24a of the harmonic drive 24 to rotate at a rate which is substantially 50 times less than the aforementioned given rotation rate.

A pulley mechanism is connected to the output transmission shaft 24a of the harmonic drive 24 so as to be rotationally driven thereby. The pulley mechanism includes a pulley wheel 21 the rotational axis of which is coincident with the rotational axis of both the harmonic drive transmission axis 24a and the drive shaft 25a of the rotary electrical motor 25. The outer cylindrical surface of the pulley wheel 21 is scored with a series of four parallel grooves which each circumscribe the outer curved surface of the wheel forming separate closed circular groove paths 33 thereon.

Anchoring sockets 34 and 35 are formed within the body of the pulley wheel 21 and each such socket possesses an access aperture on one or both flat outer wheel surfaces (upper and/or lower) of the pulley wheel 21, and linear access slots 34a and 35a which extend along the curved outer wheel surface of the pulley wheel traversing the series of circular grooves 33 thereon. The slot width of each such access slot, 34a and 35a, is substantially less than the width of the access apertures of the anchoring sockets 34 and 35.

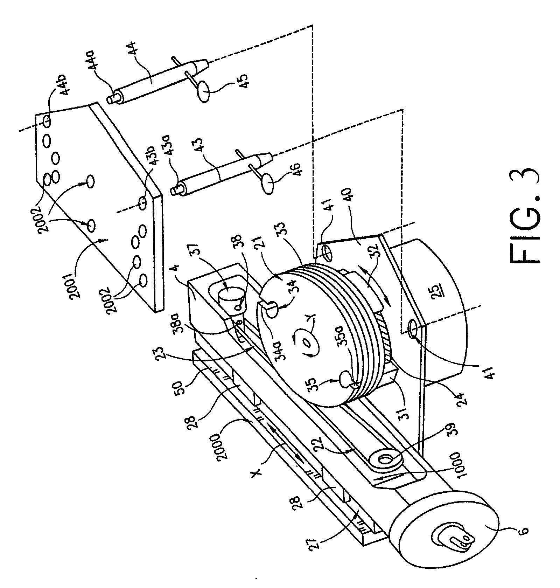

The pulley mechanism possesses a pulley wheel rotation limiter in the form of a first lug 30, a second lug 31, and a third lug 32. The first and second lugs, 30 and 31, are each firmly connected to the upper surface of a lower support plate 40 (see Figure 3) adjacent the harmonic drive 24 in between the harmonic drive and the pulley wheel 21. Similarly, the third lug 32 is firmly connected to the opposing flat outer surface of the pulley wheel 21 in between the pulley wheel and the harmonic drive mechanism 24. The three lugs, 30, 31 and 32, are positioned relative to one another such that, when the pulley wheel 21 rotates, the third lug 32 is moved therewith and is brought into direct contact with an opposing surface of one of the first and second lugs, 30 and 31, depending upon the direction in which the pulley wheel 21 is rotated.

Since the first and second lugs 30 and 31 are fixedly connected to the lower support plate 40 adjacent the harmonic drive 24, and therefore are stationary relative to the rotating pulley wheel 21 and the third lug 32 fixed to it, further rotation of the pulley wheel 21 is prevented. This pulley wheel rotation limiting mechanism is particularly useful as a safety measure to prevent rotation of the pulley wheel 21 beyond predetermined angular limits and therefore prevents over extension or retraction of the actuator shaft 4 connected to the pulley wheel 21 via the pulley line means as shall now be discussed.

The actuator shaft 4 of the electrical control loading mechanism is coupled to the pulley wheel 21 of the pulley mechanism by a pulley line comprising two separate pulley line loops 22 and 23. Each such pulley line loop comprises a loop of steel cable each of the two terminal ends of which are connected to the pulley wheel 21 such that the pulley line, extending from any one such terminal end, traverses a path which at least partially wraps around the outer curved surface of the pulley wheel 21 before extending tangentially from that outer surface (at a region of that outer surface near most the actuator shaft 4) towards a pulley line connection means located approximate one end of the actuator shaft 4.

Upon reaching a pulley line connection means, the pulley line of each pulley line loop, 22 and 23, traverses a reverse loop enclosing an associated connection means and proceeds towards the pulley wheel 21 along a path which is substantially parallel to (but is reversely directed relative to) the preceding path of the pulley line and terminates at the opposite terminal end of the pulley line loop located on the pulley wheel 21.

Each of the first and second such pulley line loops, 22 and 23, possess an anchoring block 36 formed of rigid material shaped to form a solid bolus at each pulley line terminal end. Each anchoring block 36 is dimensioned to pass through the access apertures, 34 and 35, of the anchoring sockets formed within the pulley wheel 21. Furthermore, the access slots, 34a and 35a, formed along the outer curved surface of the pulley wheel 21 are dimensioned to receive portions of pulley line loops 23 and 22 respectively, but are sufficiently narrow in width to prevent passage of anchoring blocks 36 therethrough. Thus, the first pulley line loop 21 is connectable to the pulley wheel 21 by inserting the anchoring blocks 36 of each of the two terminal ends of the pulley loop into the access aperture 35 of one of the anchoring sockets, while feeding the pulley line cable 22, extending from the anchoring blocks 36, outwardly of the anchoring socket through the access slot 35a.

By placing the lengths of pulley line cable extending from each one of the two anchoring blocks 36 within a respective one of two neighbouring pulley wheel grooves 33 and wrapping the parallel lengths of pulley cable around the pulley wheel 21, one is able to position the reverse loop of the pulley line loop 22 around a suitable pulley line connection means for connecting the reverse loop to the actuator shaft 4.

The second pulley line loop 23 is similarly connected to the pulley wheel 21 by inserting anchoring blocks 36, at the terminal ends of the pulley line loop 23, into the access aperture 34 of another anchoring socket in a manner as described in relation to pulley line loop 22 above. In this way, the pulley wheel 21 is operatively coupled to the actuator shaft 4.

A first pulley line connection means, for rigidly connecting the reverse loop of pulley line loop 22 comprises a simple washer and screw arrangement collectively denoted 39 in Figure 2. The reverse loop of the pulley line loop 22 encloses the screw part of the connecting means 39 which firmly holds the reverse loop in place upon the actuator shaft 4 at a location approximate one end of the actuator shaft. Conversely, the pulley line connection means associated with pulley line loop 23 comprises a bobbin 37 and associated adjuster screws 38 and 38a. The bobbin 37 is adjustably connected to the actuator shaft 4 via the adjuster screws 38 and 38a of that connecting means. By appropriately turning the adjuster screws one may adjust the position of the bobbin 37 relative to the actuator shaft 4. Consequently, since the reverse loop portion of the pulley line loop 23 encloses the bobbin 37 (and is in direct contact therewith), such position adjustment necessarily adjusts the position of the reverse loop enclosing the bobbin 37. In this way, adjustment of the position of connection of the pulley line loop 23 to the actuator shaft 4 may be affected. This is particularly useful in correcting for stretch in any part of the pulley cable means (i.e. in either loop 22 or loop 23), and may be employed to pre-tension the pulley line to a predetermined cable tension prior to or during use of the apparatus.

Two adjuster screws, 38 and 38a, are employed to counter/balance any torque applied (via the bobbin 37) by the pulley line loop 23 to either of the screws 38 or 38a. This helps better maintain the position of the bobbin 37 and therefore the tension of the pulley line means as a whole.

It will be noted that the actuator shaft 4 possesses a recess 1000 in the surface of the shaft which faces the pulley wheel 21 when assembled. This recess accommodates a portion of the pulley wheel 21, and those parts of the pulley cable, 22 and 23, which extend from the pulley wheel to the pulley line connectors upon the actuator shaft 4. In particular, the pulley wheel 21 is partially inserted into the recess 1000 such that those parts of the pulley line which extend from the pulley wheel to the two separated pulley line connectors extend in opposite directions. This ensures that any tension in the portion of the first pulley line loop 22, extending from the pulley wheel 21 to the pulley line connector 39, is oppositely directed to any tension present in the portion of the second pulley line loop 23 extending from the pulley wheel 21 to the bobbin 37.

In this way the tensions in the pulley line (both loops) is balanced and stops the pulley line generating forces which are transverse to the axis of rotation (X) of the actuator shaft 4.

Furthermore, the electrical control loading apparatus also includes a loading interface member 6 (comprising a force sensor) connected to the actuator shaft 4 providing an interface between the actuator shaft 4 and any user manipulable vehicle simulator control member (e.g. items 5 and 2 of Figure 1). The loading interface member 6 is used not only to sense force but also to connect the actuator shaft 4 of the electrical control loading apparatus to the user manipulable aircraft simulator control stick 2 via the intermediate control rod 5 (using linkages such as would be readily apparent to the skilled person) for the purposes of enabling a loading force to be provided thereto by the urging of substantially linear movement in the actuator shaft 4.

It is to be noted that the region of loading force application of the loading interface member 6 and those parts of the pulley line loops, 22 and 23, which extend between the pulley wheel 21 and the actuator shaft 4 are arranged in a line (X) along which rotation of the pulley wheel 21 urges the actuator shaft to move. Thus, the pulley line loops 22 and 23 are connected to the actuator shaft such that it pulls the actuator shaft along a linear path as the pulley wheel 21 rotates in response to rotation of the rotary electrical drive motor 25. By ensuring that the loading interface member 6 lies upon this linear path, the control loading apparatus ensures that the direction of the pulling force applied to the actuator shaft 4, by one of the two pulley line loops 22 and 23, intersects the point of application of the resultant loading force applied by the loading interface member 6 to the intermediate control rod 5.

A particular advantage of such an arrangement is the resultant balancing of the loading force with any oppositely directed reactive force emanating from the aircraft control stick 2 via the control rod 5. Should the line of force provided by the pulley line be in some way off-set from the loading force applied by the loading interface member 6, a resultant torque would be applied to the actuator shaft for which would typically result in stresses upon its structure and in particular upon the load bearings associated with the actuator shaft 4.

Load bearings for the actuator shaft 4 are illustrated in Figure 2 in the form of sliding bearings 28 slidingly mounted upon a slide rail 27. The sliding bearings 28 are spaced apart upon the sliding rail 27 and are fixedly connected to separate parts of the actuator shaft 4 such that the sliding rail 27 lies parallel to the axis of linear motion (X) traversed by the actuator shaft 4 in use. The sliding rail 27 may be located within a dedicated housing groove 29 formed within the outer surface of the actuator shaft 4.

Figure 3 illustrates the control loading apparatus of Figure 2 in fully assembled form. Like items share like reference numerals for consistency.

The control loading apparatus of Figure 3 further includes an attachment structure including a top-plate 2001 and a lower frame comprising a side plate 50 depending from the top-plate, and a lower support plate 40 extending underneath the top-plate from the lower parts of the side plate. The lower support plate 40 has attached to it the electrical rotary motor 25, the harmonic transmission drive 24, and the first and second lugs (30 and 31) of the pulley wheel rotation limiter. The side-plate 50 is rigidly connected to the lower support plate 40 and has rigidly connected to it the sliding rail 27 of the sliding bearing associated with the actuator shaft 4.

The actuator shaft 4 is, of course, directly connected to no part of the attachment structure and is able to move along a linear axis (X) relative thereto upon operation of the electrical rotary drive motor 25.

The lower support plate 40 possesses a first aperture 41 and a second aperture 42 each of which are dimensioned to receive a respective mounting shaft (items 44 and 43 respectively) each of which mounting shafts has an associated quick-release pin (items 45 and 46 respectively) passing through the shaft traversing its shaft axis.

The top-plate 2001 may be initially mounted to the simulator frame 1 via bolts (not shown) extending from the underside of the top-plate through the pre-patterned bolt-holes 2002 arranged within the top-plate, and into correspondingly patterned bolt-holes (or the like) forming the mounting means of the simulator frame. This top-frame mounting may be performed initially without the side plate 50 and lower support plate 40 attached thereto.

Rather, the electrical loading control apparatus may be attached to the side and lower support plates before the latter are subsequently attached to the pre-mounted top-plate as follows.

The upper ends (43a and 44a) of the mounting shafts 43 and 44 may be inserted into respective bolt holes 43b and 44b to subsequently rigidly connect (e.g. bolt) the mounting shafts 43 and 44 to the top-plate 2001.

The lower ends of the two mounting shafts may be passed through respective apertures in the lower support plate 40 from below as indicated (with quick-release pins removed), until a respective lower end of each of the two shafts 44 and 43 pass through a respective one of the apertures (41 and 42 respectively) of the lower support plate 40 such that those lower shaft ends extend beyond the underside of the lower support plate.

This enables off-frame or bench assembly of the electrical control loading apparatus and subsequent direct attachment (fully assembled) thereof to an aircraft simulator frame via the pre-mounted top-plate thereby to form a fully assembled de-mountable electrical control loading unit in mounted state. This also permits mounting bolt-hole patterns 2002 which are inaccessible once the support frame (40, 50) is attached to the top-frame, since there is no need to access those bolts in order to detach the lower support frame therefrom.

Any subsequent detachment of the apparatus may simply be achieved by removing the quick-release pins, 45 and 46, from the mounting shafts 44 and 43 respectively to release the support frame (40, 50), and the apparatus attached thereto, from the top-plate and the simulator frame. The top-plate may account for about 6kg of the overall weight of the assembled de-mountable unit.

Operation of the apparatus illustrated in Figures 2 and 3 will be readily apparent to the reader.

Referring to Figure 3, operation of the electrical rotary motor 25 causes a rotation of the pulley wheel 21 in either one of two directions (Y) as illustrated.
Rotation of the pulley wheel 21 is affected via the transmission reduction unit 24 such that rotation of the pulley wheel 21 occurs at a predetermined lesser rate than the rotation of the drive axle of the rotary motor 25.

Clockwise rotation, as viewed looking down upon the upper flat wheel surface of the pulley wheel 21 visible in Figure 3, causes the first pulley line loop 22 to pull upon the actuator shaft 4 to which it is connected, thereby urging motion thereof which would retract the actuator shaft 4. Conversely, anticlockwise rotation of the pulley wheel 21 causes the pulley line loop 23 to pull the actuator shaft 4 in an opposite direction thereby urging motion of the actuator shaft which would cause the shaft to extend. In this way, a purely rotational drive force from a rotary electrical drive motor 25 is converted into a substantially linear control loading force.

In the present embodiment, a linear extension range of the actuator shaft 4 of 110 mm (e.g. +/- 55mm from a midpoint in the extension range) is provided, as measured from a position of full retraction of the actuator shaft 4. The control loading apparatus illustrated in Figure 3 may be housed within a rectangular volume measuring: 585mm long (in the direction of actuator shaft motion when fully retracted); 240 mm wide; 275mm high.

The actuator shaft 4, pulley line loops 22 and 23, and loading interface member 5 are arranged in a line (parallel to axis X, and along which loading forces are directed) which lies 35mm below the uppermost part 2000 of the top-plate 2001 of the attachment structure such that the line of loading force resides 35mm from the simulator frame to which it is connected. The entire apparatus so mounted may weigh about 27 Kg.

Loading forces of about 3000N (continuous force), or about 4000N (peak force for a limited duration) may be generated according to the present embodiment. Actuator shaft retraction/extension speeds of at least about 300mm/sec may be achieved, with loading forces equivalent to several "g" (1 "g" = 9.81 m/s²).

Of course, other control loading apparatus dimensions, weights and performance characteristics are possible.

The above described embodiments represent merely examples of the present invention and modifications and variants of these embodiments, as would be readily apparent to the skilled person, are encompassed by the scope of the present invention.

## Claims

1. An electrical control loading apparatus for providing a loading force for application to a user manipulable vehicle simulator control member, the apparatus including an electrical actuator comprising:
an electrical rotary drive motor;
a pulley means having a pulley wheel means operatively coupled to the electrical drive motor, and a pulley line means;
an actuator shaft connected to the pulley line means such that operation of the rotary drive motor urges non-arcuate and substantially linear movement of the actuator shaft;
loading interface means connected to the actuator shaft for providing an interface between the actuator shaft and a user manipulable vehicle simulator control member, and for applying a loading force as provided by the urging of substantially linear movement of the actuator shaft.

2. An electrical control loading apparatus according to Claim 1 wherein the loading interface means and those parts of the pulley line means which extend between the pulley wheel means and the actuator shaft are arranged in a line along which the substantially linear movement of the actuator shaft is urged.

3. An electrical control loading apparatus according to any preceding claim wherein the pulley line means is connected to the actuator shaft at two separated connection locations such that those parts of the pulley line means which extend from the pulley wheel means to the two separated connection locations extend in opposite directions along which the substantially linear movement of the actuator shaft is urged.

4. An electrical control loading apparatus according to Claim 3 wherein the pulley line means comprises two separate pulley lines each of which is separately connected to the pulley wheel means and is connected to the actuator rod at a respective one of two the separated connection locations.

5. An electrical control loading apparatus according to Claim 3 or Claim 4 wherein those parts of the pulley line means extending from the pulley wheel means to the actuator shaft form one or more loops of pulley line, and the actuator shaft has connector means located at the two separated connection locations via which the pulley line means is connected to the actuator shaft, wherein the connector means at one or more of the two separated connection locations engages with and is enclosed by the pulley line loop(s).

6. An electrical control loading apparatus according to Claim 5 wherein the connector means are adjustable such that at least one of the two separated connections locations is an adjustable location.

7. An electrical control loading apparatus according to any preceding claim wherein the electrical actuator has a pulley wheel rotation-limiting means arranged to limit rotation of the pulley wheel means to be within a predetermined angular rotation range.

8. An electrical control loading apparatus according to Claim 7 wherein the pulley wheel rotation-limiting means comprises one or more lugs arranged upon the electrical actuator in proximity to the pulley wheel means and arranged to engage with parts of the pulley wheel means when the pulley wheel means has rotated through a predetermined angle thereby to prevent further rotation of the pulley wheel means such as would cause the predetermined angle to be exceeded.

9. An electrical control loading apparatus according to any preceding claim including a drive gear means operatively connected to both the electrical rotary drive motor and the pulley wheel means and providing a drive coupling therebetween such that operation of the electrical rotary motor at a given rotation rate causes the pulley wheel means to simultaneously rotate at a predetermined lesser rate than the given rotation rate of the rotary motor.

10. An electrical control loading apparatus according to any preceding claim further including actuator control means for generating actuator control signals and for controlling the operation of the electrical actuator in accordance with such actuator control signals.

11. A flight simulator including an electrical control loading apparatus according to any preceding claim.

12. A method of electrical control loading for providing a loading force for application to a user manipulable vehicle simulator control member, the method including:
providing an electrical rotary drive motor;
providing a pulley means having a pulley wheel means and a pulley line means; and,
providing an actuator shaft;
operatively coupling the pulley wheel means to the electrical drive motor;
connecting the pulley line means to the actuator shaft such that operation of the rotary drive motor urges non-arcuate and substantially linear movement of the actuator shaft;
providing loading interface means being connected to the actuator shaft to provide an interface between the actuator shaft and a user manipulable vehicle simulator control member; and,
operating the rotary drive motor so as to apply a loading force as provided by the urging of substantially linear movement of the actuator shaft.

13. A method of electrical control loading according to Claim 12 including the step of arranging in a line the loading interface means and those parts of the pulley line means which extend between the pulley wheel means and the actuator shaft, along which line the substantially linear movement of the actuator shaft is urged.

14. A method of electrical control loading according to any of preceding claims 12 or 13 including the step of connecting the pulley line means to the actuator shaft at two separated connection locations such that those parts of the pulley line means which extend from the pulley wheel means to the two separated connection locations extend in opposite directions along which the substantially linear movement of the actuator shaft is urged.

15. A method of electrical control loading according to Claim 14 including:
providing the pulley line means in the form of two separate pulley lines;
separately connecting each of the two separate pulley lines to the pulley wheel means; and,
connecting each of the two separate pulley lines to the actuator rod at a respective one of two the separated connection locations.

16. A method of electrical control loading according to Claim 14 or Claim 15 including the steps of:
providing the actuator shaft connector means located at the two separated connection locations;
connecting the pulley line means to the actuator shaft using the actuator shaft connector means such that those parts of the pulley line means extending from the pulley wheel means to the actuator shaft form one or more loops of pulley line, wherein the connector means at one or more of the two separated connection locations engages with and is enclosed by the pulley line loop(s).

17. A method of electrical control loading according to Claim 16 wherein the connector means are adjustable such that at least one of the two separated connections locations is an adjustable location.

18. A method of electrical control loading apparatus according to any of preceding claims 12 to 17 including the step of providing the electrical actuator with a pulley wheel rotation-limiting means arranged to limit rotation of the pulley wheel means to be within a predetermined angular rotation range.

19. A method of electrical control loading apparatus according to Claim 18 comprising arranging one or more lugs upon the electrical actuator in proximity to the pulley wheel means so as to engage with parts of the pulley wheel means when the pulley wheel means has rotated through a predetermined angle thereby to prevent further rotation of the pulley wheel means such as would cause the predetermined angle to be exceeded.

20. A method of electrical control loading according to any of preceding claims 12 to 19 including operatively connecting a drive gear means to both the electrical rotary drive motor and the pulley wheel means to provide a drive coupling therebetween such that operation of the electrical rotary motor at a given rotation rate causes the pulley wheel means to simultaneously rotate at a predetermined lesser rate than the given rotation rate of the rotary motor.

21. A method of electrical control loading according to any of preceding claims 12 to 20 further including providing an actuator control means for generating actuator control signals and for controlling the operation of the electrical actuator in accordance with such actuator control signals.

22. An electrical control loading apparatus substantially as described in any one embodiment hereinbefore with reference to the accompanying drawings.

23. A method of electrical control loading substantially as described in any one embodiment hereinbefore with reference to the accompanying drawings.
